# EUROPEAN PATENT APPLICATION

(11) **EP 1 837 818 A1**
(43) Date of publication of application: **26.09.2007**
(21) Application number: 07103317.9
(22) Date of filing: 01.03.2007
(51) Int. Cl.: G06Q 10/00, H04N 1/32, G06F 9/44, H04N 1/00

(54) **Workflow processing apparatus, workflow processing method, and computer program product for a multifunction product**

(30) Priority: 20.03.2006 JP 2006077738
(71) Applicant: Ricoh Company, Ltd., Tokyo 143-8555 (JP)
(72) Inventor: Tanabe, Kazuhide, Tokyo 143-8555 (JP)
(74) Representative: Schwabe - Sandmair - Marx

(57) **Abstract**

A workflow processing apparatus includes a request receiving unit (301) that receives an input related to a work, an execution-flow creating unit (305) that creates an execution flow to perform the work, and an execution determining unit (307) that determines whether the execution flow is executable. The workflow processing apparatus further includes an execution-flow storage unit (302) that stores executable execution flow, a flow control unit (303) that controls execution of the executable execution flow, and a function control unit (304) that controls resources to perform the functions under control of the flow control unit (303). The resources include an input unit, a processing unit, and an output unit.

## Description

### CROSS-REFERENCE TO RELATED APPLICATIONS

The present document incorporates by reference the entire contents of Japanese priority document, 2006-077738 filed in Japan on March 20, 2006.

### BACKGROUND OF THE INVENTION

### 1. Field of the Invention

The present invention relates to a workflow processing apparatus, a workflow processing method, and a computer program product.

### 2. Description of the Related Art

In recent years, a workflow system has been known that manages and automates a flow of documents and information exchanged between two or more persons who carry out a work via a network so that the work is smoothly processed. Reference may be had to, for example, http://www.atmarkit.co.jp/aig/04biz/workflow.html, http://www.atmarkit.co.jp/aig/04biz/erpackage.html, and http://www.atmarkit.co.jp/aig/04biz/groupware.html.

The workflow system specifies jobs and a sequence thereof that are necessary to carry out a certain object with effective cooperation among a plurality of departments and people. The site on http://www.atmarkit.co.jp/aig/04biz/erpackage.html proposes a technology for managing a workflow. However, the conventional technology is disadvantageous in that registration of a workflow requires special and unfamiliar operations, and understanding of job procedures.

Meanwhile, with regard to a multifunction product (MEP), a programming feature is known that, by storing settings or parameters specified by a user, for example, a magnification ratio, a print size, and finishing for copying operation, eliminates the need to specify the same settings again when the same process is to be performed. However, because such an MFP stores therein settings or parameters for only one function, the MFP is not capable of handling a workflow including a plurality of jobs. In addition, because some functions cannot be performed by the programming feature, a user has to learn the programming feature before using it.

### SUMMARY OF THE INVENTION

It is an object of the present invention to at least partially solve the problems in the conventional technology.

According to an aspect of the present invention, a workflow processing apparatus includes a receiving unit that receives an input related to a work, a flow creating unit that creates a flow of the work indicating processes of the work, an order in which the processes are performed, functions required for the processes, and settings for the functions, a determining unit that determines whether the flow is executable, a storing unit that stores executable flow in a storage device, a flow control unit that controls execution of the executable flow in the storage device, and a function control unit that controls resources to perform the functions under control of the flow control unit. The resources include an input unit, a processing unit, and an output unit.

According to another aspect of the present invention, a workflow processing method includes receiving an input related to a work, creating a flow of the work indicating processes of the work, an order in which the processes are performed, functions required for the processes, and settings for the functions, determining whether the flow is executable, storing executable flow in a storage device, controlling execution of the executable flow in the storage device, and controlling resources to perform the functions.

According to still another aspect of the present invention, a computer program product includes a computer usable medium having computer readable program codes embodied in the medium that, when executed, cause a computer to implement the above method.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS .

Fig. 1 is a block diagram of a workflow system according to an embodiment of the present invention;
Fig. 2 is a flowchart of a process performed by the workflow system;
Fig. 3 is a schematic for explaining a network environment surrounding an MFP according to the embodiment;
Fig. 4 is a block diagram of a hardware configuration of the MFP;
Fig. 5 is a schematic for explaining a relationship between software and hardware of the MFP;
Fig. 6 is a functional block diagram of software in a controller of the MFP that functions as a workflow processing apparatus;
Fig. 7 is a flowchart of a macro registration process performed by the workflow processing apparatus;
Fig. 8 is a schematic for explaining macro setting;
Fig. 9 is a schematic for explaining automatic macro setting;
Fig. 10 is a schematic of an execution flow of a macro shown in Fig. 8;
Fig. 11 is a schematic of an execution flow of a macro shown in Fig. 9;
Fig. 12 is an example of contents of an input/output-function association table;
Fig. 13 is a flowchart of a basic process performed by the workflow processing apparatus; and
Fig. 14 is a flowchart of a process performed by the workflow processing apparatus utilizing a registered macro to carry out a work.

### DETAILED DESCRIPTION OF THE PREFERRED EMBODIMENTS

Exemplary embodiments of the present invention are explained below in detail with reference to the accompanying drawing. The present invention is not limited to the embodiments, and is applicable to various apparatuses that manage data.

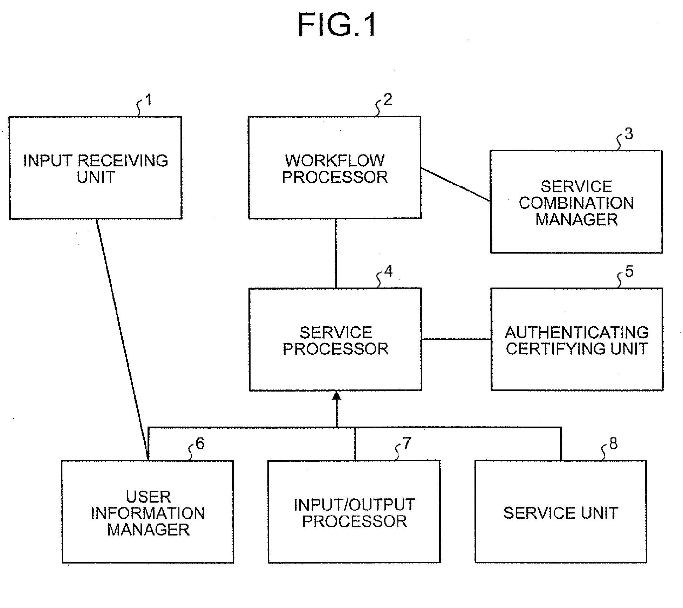

Fig. 1 is a block diagram of a workflow system according to an embodiment of the present invention. The workflow system includes an input receiving unit 1, a workflow processor 2, a service combination manager 3, a service processor 4, an authenticating unit 5, a user information manager 6, an input/output processor 7, and a service unit 8. The input receiving unit 1 receives a request for usage of the system from a user through a user terminal. The workflow processor 2 interprets the request of the user received through the input receiving unit 1 and creates an execution flow to execute a workflow. The service combination manager 3 determines whether a combination of services, which are formed by the workflow processor 2, in the execution flow is executable. The service processor 4 controls execution of services in the execution flow created by the workflow processor 2. The authenticating unit 5 authenticates a user. The user information manager 6 manages user information. The input/output processor 7 inputs and outputs data such as documents. The service unit 8 offers other services.

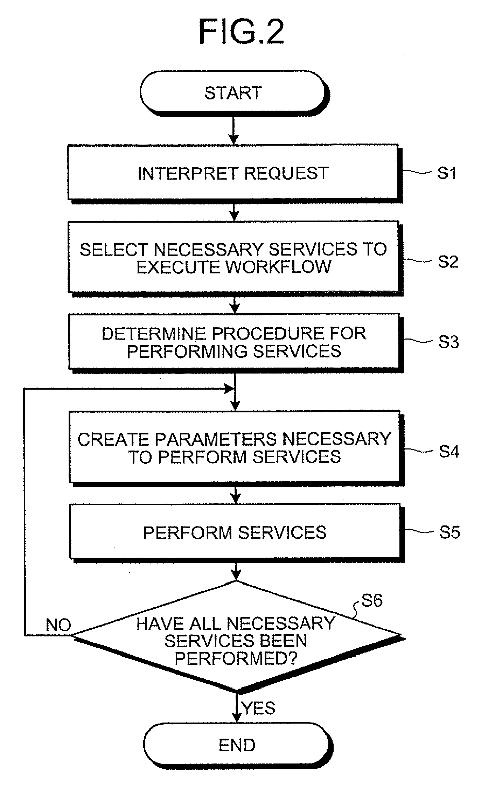

Fig. 2 is a flowchart of a process performed by the workflow system. The input receiving unit 1 receives an input of descriptions of processes pertaining to a work (request) from a user. The workflow processor 2 interprets the request (step S1), selects services necessary to perform the processes (step S2), and determines a procedure in which the services are to be performed (step S3). The workflow processor 2 creates parameters necessary to perform the services (step S4), thereby creating an execution flow. The service processor 4 performs the services according to the execution flow created by the workflow processor 2 (step S5, S6).

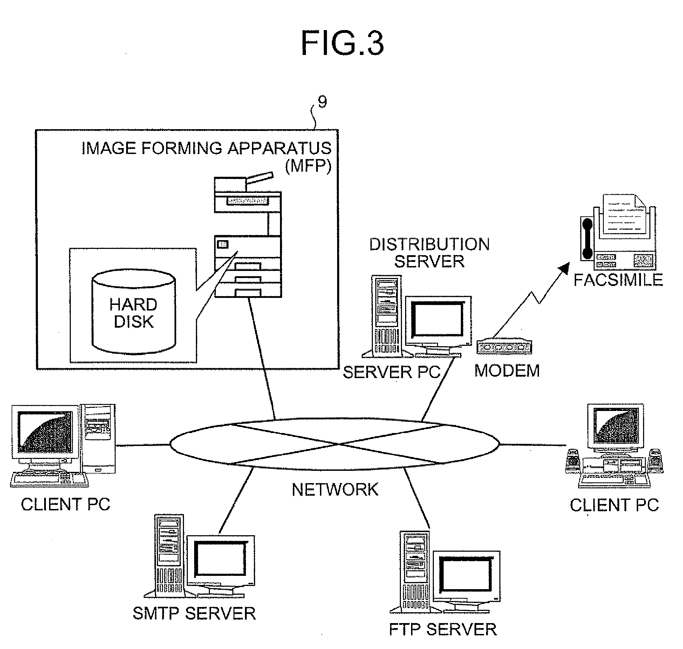

In the following explanation, a workflow processing apparatus according to the embodiment is applied to an image forming apparatus such as MFP. First, an outline of such an MFP is explained with reference to Figs. 3 to 5. Fig. 3 is a schematic for explaining a network environment surrounding an MFP 9 according to the embodiment.

Recent developments in networking allow equipment, such as a personal computer (PC) provided in an office, to be connected to a network, such as a local area network (LAN), and enable network communications. For example, as shown in Fig. 3, a client PC, a simple mail transfer protocol (SMTP) server, a file transfer protocol (FTP) server, a server PC, and the like, are connected to a network such as a LAN, which allows transmission/reception of electric mail (hereinafter, "email") and file transfer. A distribution server connected to the network via a modem is capable of communicating with a facsimile machine outside the office.

As networking moves forward as described above, the MFP 9 is also connected to the network, to thus be capable of communicating with equipment, such as a PC. In addition, incorporating a storage device, such as a hard disk, has advanced the MFP 9 to a so-called network MFP, which allows the MFP 9 to respond to various needs of users.

Specifically, the MFP 9 has come to include, in addition to a normal copying function, a printer function of printing data, and the like, upon receipt of a print request from the client PC, a facsimile function of transmitting data, and the like, to a facsimile machine in another office via a modem connected to a server PC upon receipt of a facsimile request from the client PC, and a storage function of storing received facsimile data and data used in copying in the built-in hard disk. To perform these many functions, software installed in the MFP 9 has increased in size and become more complicated.

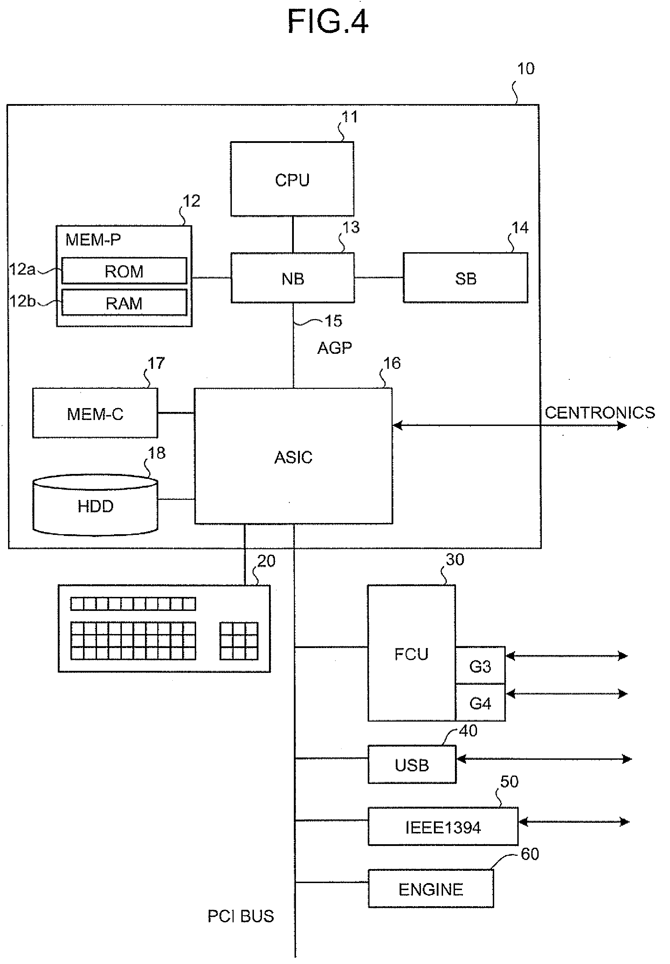

Fig. 4 is a block diagram of a hardware configuration of the MFP 9. The MFP 9 includes a controller 10 and an engine 60, which are connected together with a peripheral component interconnect (PCI) bus. The controller 10 controls the MFP 9, and image drawing, communication, and input through an operating unit 20. The operating unit includes input keys and a touch panel display. The engine 60 is a printer engine, or the like, that can be connected to the PCI bus. Examples of the engine 60 include a monochrome plotter, a 1-drum color plotter, a 4-drum color plotter, a scanner, and a facsimile unit. The engine 60 includes, in addition to a so-called engine portion such as the plotter, an image processing portion that performs error diffusion, gamma conversion, and the like.

The controller 10 includes a central processing unit (CPU) 11, a north bridge (NB) 13, a system memory (MEM-P) 12, a south bridge (SB) 14, a local memory (MEM-C) 17, an application specific integrated circuit (ASIC) 16, and a hard disk (HDD) 18, where an accelerated graphics port (AGP) bus 15 connects between the NB 13 and the ASIC 16. The MEM-P 12 includes a read only memory (ROM) 12a and a random access memory (RAM) 12b.

The CPU 11 controls the MFP 9, and has a chip set that includes the NB 13, the MEM-P 12, and the SB 14. The CPU 11 is connected to other equipment via the chip set.

The NB 13 is a bridge for connecting the CPU 11 with the MEM-P 12, the SB 14, and the AGP 15, and has a memory controller, a PCI master, and an AGP target. The memory controller controls reading and writing from and to the MEM-P 12.

The MEM-P 12 is system memory used as memory for storing programs and data, for expanding programs and data, for image drawing of the printer, and the like. The MEM-P 12 includes the ROM 12a and the RAM 12b. The ROM 12a is read only memory used as memory for storing programs and data. The RAM 12b is random access memory used as memory for expanding programs and data, for image drawing of the printer, and the like.

The SB 14 is a bridge for connecting the NB 13 with a PCI device and peripheral devices. The SB 14 is connected to the NB 13 via the PCI bus, to which a network interface (I/F), and the like, are also connected.

The ASIC 16 is an integrated circuit (IC) for use in image processing, and includes a hardware element for image processing. The ASIC 16 functions as a bridge that connects the AGP 15, the PCI bus, the HDD 18, and the MEM-C 17 with one another. The ASIC 16 includes a PCI target and an AGP master, an arbiter (ARB) which is a core of the ASIC 16, a memory controller that controls the MEM-C 17, a plurality of direct memory access controllers (DMACs) that performs rotation of image data by a hardware logic and the like, and a PCI unit that exchanges data with the engine 60 via the PCI bus. A fax control unit (FCU) 30, a universal serial bus (USB) 40, an Institute of Electrical and Electronics Engineers (IEEE) 1394 interface, and an interface 50 are connected to the ASIC 16 via the PCI bus.

The MEM-C 17 is local memory used as a copy image buffer and a code buffer. The HDD 18 is storage for storing image data, programs, font data, and forms.

The AGP 15 is a bus interface for a graphics accelerator card devised for speedup in graphics processing. The AGP 15 directly accesses the MEM-P 12 at a high throughput to thereby allow the graphics accelerator card to speed up.

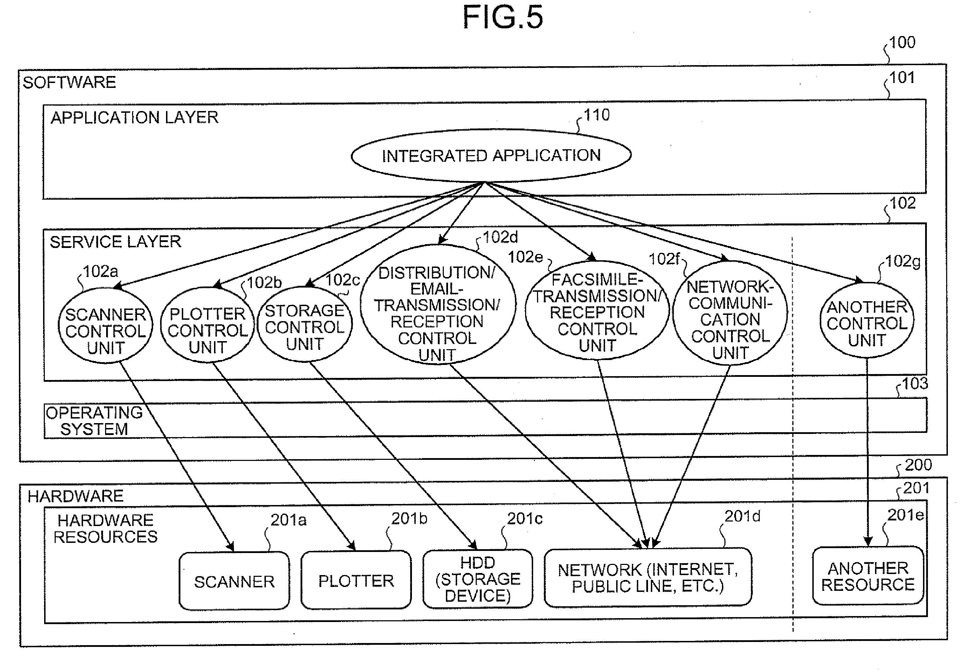

Fig. 5 is a conceptual diagram of a configuration of hardware and software of the MFP 9. Specifically, Fig. 5 depicts a hierarchical relationship among an integrated application 110 that, software 100, and hardware 200. The integrated application 110 includes a request manager 113a. As shown in Fig. 5, the hardware 200 has hardware resources 201 that include a scanner 201a, a plotter 201b, a HDD 201c, a network 201d, and another resource 201e. The resource 201e includes one or more resources except for the hardware resources 201a to 201d. Examples of the resource 201e include an input/output device such as an operating panel.

The software 100 installed in the hardware 200 is layered such that a service layer 102 is constructed as an upper layer of the operating system 103, and an application layer 101 is constructed as an upper layer of the service layer 102. The service layer 102 includes a scanner control unit 102a, a plotter control unit 102b, a storage control unit 102c, a distribution/email-transmission/reception control unit 102d, a facsimile-transmission/reception control unit 102e, a network-communication control unit 102f, and another control unit 102g, each serving as a driver for controlling a corresponding one of the hardware resources (201a to 201e).

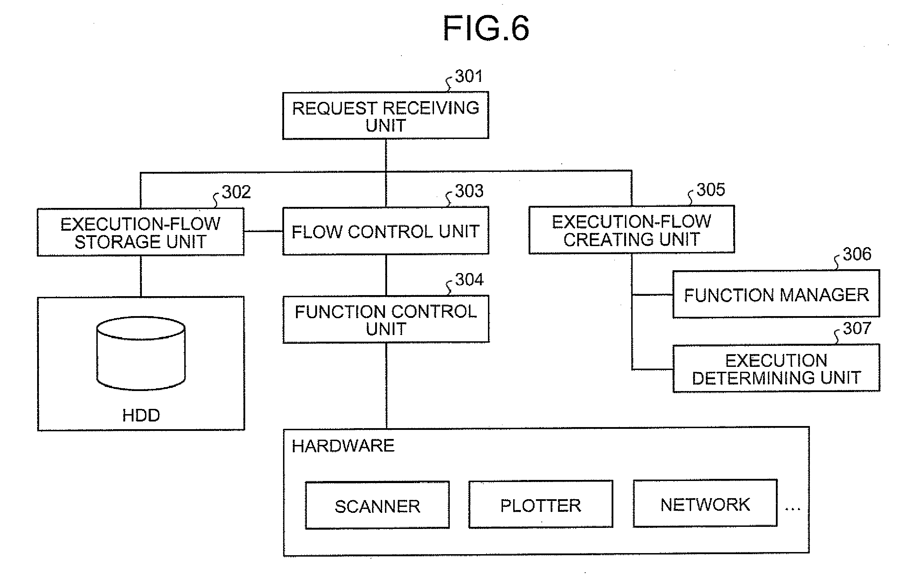

Fig. 6 is a functional block diagram of software in the controller 10 of the MFP 9 that functions as a workflow processing apparatus. The controller 10 functions as a request receiving unit 301, an execution-flow storage unit 302, a flow control unit 303, a function control unit 304, an execution-flow creating unit 305, a function manager 306, and an execution determining unit 307.

The request receiving unit 301 receives settings for processes (process descriptions) pertaining to a work interaction with a user from the operating unit, sends data about the process descriptions pertaining to the work to the execution-flow creating unit 305, and requests the work to the execution-flow creating unit 305 to create an execution flow. The request receiving unit 301 requests the flow control unit 303 to perform and control a procedure of the execution flow. The request receiving unit 301 requests the execution-flow storage unit 302 to store the execution flow created by the execution-flow creating unit 305.

The execution-flow creating unit 305 interprets the process descriptions pertaining to the work according to the request from the request receiving unit 301, and creates the execution flow that describes functions, a sequence thereof, detailed settings necessary to carry out the functions, and other descriptions of the functions. The execution-flow creating unit 305 requests the function manager 306 to determine whether a combination of the functions described in the execution flow is executable. The execution-flow creating unit 305 also requests the execution determining unit 307 to determine whether settings of the functions are executable.

Upon receipt of the request for determination from the execution-flow creating unit 305, the function manager 306 checks whether the requested functions are provided by an input unit, a processing unit, an output unit and the like (resources) of equipment in the system, and outputs a result of determination to the execution-flow creating unit 305.

Upon receipt of the request for determination from the execution determining unit 305, the execution determining unit 307 determines, based on conditions and settings of the equipment, whether the settings for the functions are executable, and outputs a result of determination to the execution-flow creating unit 305.

The flow control unit 303 requests the function control unit 304 to perform the functions on a function-by-function basis according to the sequence and the settings described in the execution flow created by the execution-flow creating unit 305, and manages its progress.

The function control unit 304 controls resources, such as the input unit, the processing unit, and the output unit, provided in the equipment, receives data on types and descriptions of the functions to be executed from the flow control unit 303, and performs the functions according to the descriptions. The function control unit 304 forms a schedule to be followed by the functions.

The execution-flow storage unit 302 stores the execution flow created by the execution-flow creating unit 305 in the storage device (the HDD 201c), and manages it to allow a user to reuse the execution flow.

The workflow processing apparatus according to the embodiment enables to perform a routine work easily. In the conventional art, as described above, while some portion of a work is executed by utilizing a programmed feature, some other portion of the work is executed by entering process descriptions each time of carrying out the work. In contrast, the workflow processing apparatus according to the embodiment allows pre-set/newly-input settings to be registered in the form of, e.g., a macro. In addition, the workflow processing apparatus allows automatic (regular) setting in advance. Hence, a routine work to be performed repeatedly can be carried out with a simple operation. Because this allows a user to concentrate on a fundamental job (e.g., creation of a document), it is possible to utilize the time, which can otherwise be spent for the routine work, effectively.

An example in which a work A to be performed by a user B (hereinafter, "the work A by the user B") is described below. The work A is to notify members of a group A about a regular meeting on every Monday morning in advance (via email), and to prepare meeting material for the members (10 copies) on the day of the meeting.

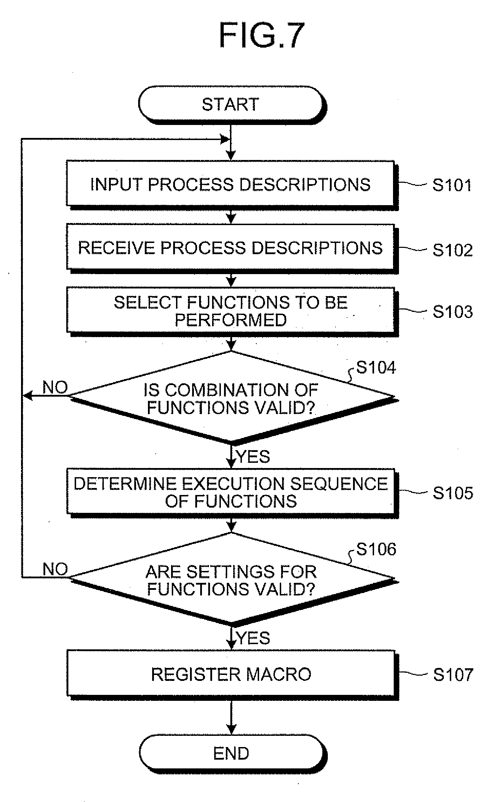

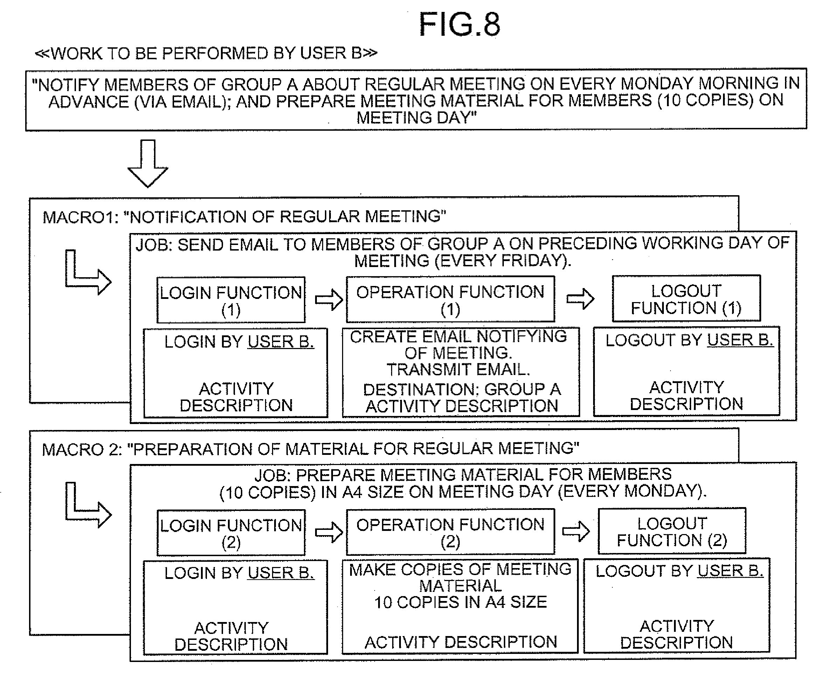

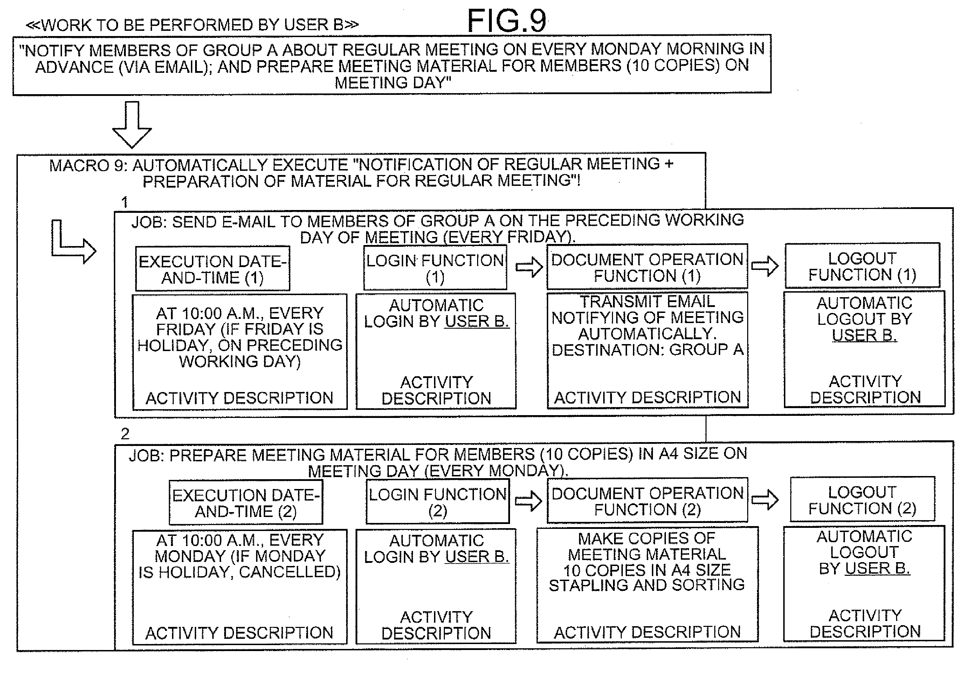

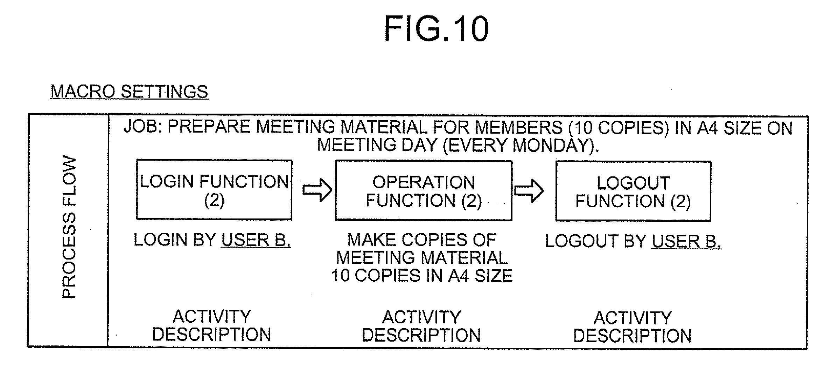

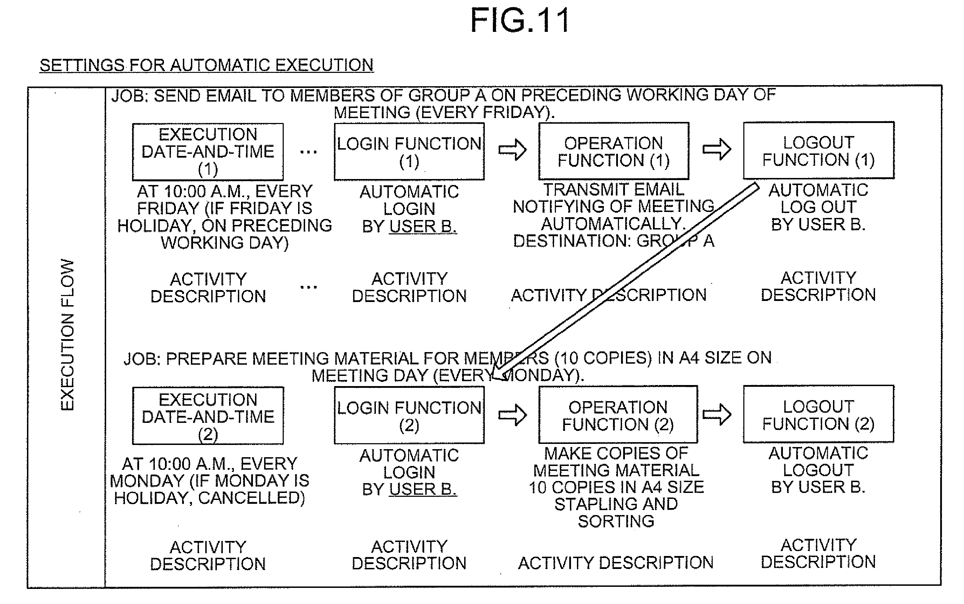

Fig. 7 is a flowchart for explaining a macro registration process performed by the workflow processing apparatus. Fig. 8 is a schematic for explaining macro setting. Fig. 9 is a schematic for explaining automatic macro setting. Fig. 10 is a schematic of an execution flow of macro 2 shown in Fig. 8. Fig. 11 is a schematic of an execution flow of macro 9 shown in Fig. 9.

An example, in which a macro for "the work A by the user B" including such operations as shown in Fig. 8 that schematically depicts macro settings, is described below. Alternatively, the macro for "the work A by the user B" can be created and registered to include such operations as shown in Fig. 9 that schematically depicts automatic macro setting.

With reference to Fig. 7, a user inputs descriptions of a work (processes) to be performed by the user from the operating unit (step S101). Specifically, the user inputs the descriptions of processes to be performed by the user through the operating unit. The user determines a range of processes to be performed by a single macro.

Meanwhile, processes can be formed into a set of independent macros as shown in Fig. 8, which schematically depicts macro settings, or, alternatively into a single macro as shown in Fig. 9, which schematically depicts automatic macro setting. The macro settings schematically shown in Fig. 8 are appropriate for processes the user desires to control timings thereof. The macro settings schematically shown in Fig. 9 are appropriate for processes all of which are desired to perform fully automatically.

The work A by the user B includes two jobs of "transmitting email" and "making copies". The following describes an example in which, as shown Fig. 8 that schematically depicts macro settings, two macros are created for "transmitting email" and "making copies", respectively.

Because this job is to be performed by the user B, a login user is set to the user B (activity description). Next, settings are made such that: email notifying of the meeting is created, the group A is input as its destination, and the email is transmitted (activity descriptions). Subsequent settings are made such that: a logout user is the user B (activity description), and thereafter the process in macro 1 ends.

The setting of macro 2 for "making copies" is described next. Because this job is also to be performed by the user B, a login user is set to the user B (activity description). Next, making ten copies of a meeting material, created by the user B, in A4 size is set (activity description). Subsequent settings are made such that: a logout user is the user B (activity description), and thereafter the process in macro 2 ends.

The request receiving unit 301 receives the process descriptions input by the user (step S102). Specifically, the user completes input of the process descriptions, and sends a report to the request receiving unit 301 to this effect. The process descriptions inputted at step S101 are temporarily stored in the request receiving unit 301 each time the user inputs process descriptions. Upon receipt of the report notifying that input of process descriptions is completed from the user, the request receiving unit 301 sends the process descriptions to the execution-flow creating unit 305, and requests the work to the execution-flow creating unit 305 to create an execution flow.

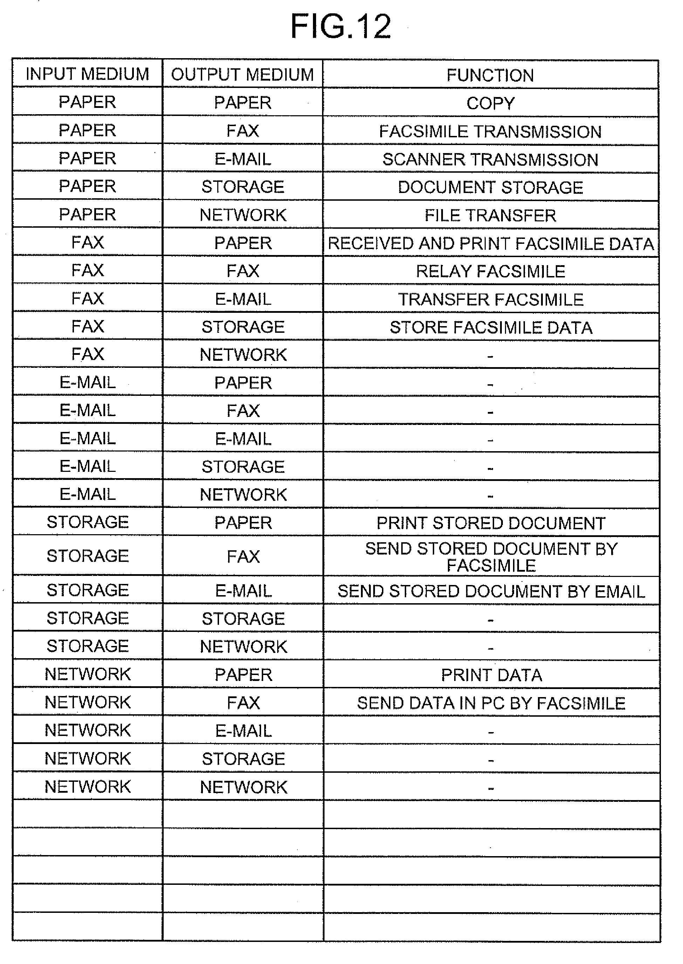

The execution-flow creating unit 305 selects a combination of functions (step S103). Specifically, the execution-flow creating unit 305 refers to an input/output-function association table, and determines which combination of functions can carry out the processes as defined by the process descriptions input by the user. Fig. 12 is an example of contents of the input/output-function association table. As shown in Fig. 12, the input/output-function association table contains associated sets of an input medium, an output medium, and a function. The input/output-function association table is stored in a storage medium such as an HDD or memory.

For example, because the setting for email transmission is made in the "work A by the user B", the work requires a function of reading data from, for example, a document to create image data, and a function of transmitting the image data via email (input medium: paper, output medium: email, and function: scanner transmission). In addition, because copying is also set, the work requires a function of reading data from a document to create image data, and a function of printing the image data to create a document (input medium: paper, output medium: paper, and function: copy).

Subsequently, the execution-flow creating unit 305 determines whether the combination of functions is valid (step S104). Specifically, the selected plurality of functions are combined into different combinations, and each combination is subjected to discrimination as to whether being executable. When a combination is not found in the input/output-function association table, or includes a function that is not provided in the system, the settings cannot be executed. Hence, this discrimination is made to reject non-executable settings.

More specifically, the execution-flow creating unit 305 inquires of the function manager 306 whether a selected combination of functions is executable. The function manager 306 checks whether each function is provided in the system, thereby determining whether the combination of functions is executable, and notifying the execution-flow creating unit 305 of a result of determination. When the execution-flow creating unit 305 receives a result of determination that the combination of functions is executable from the function manager 306 (YES at step S104), the process moves to step S105. When the execution-flow creating unit 305 receives a result of determination that the combination of functions is non-executable from the function manager 306 (NO at step S104), the process returns to step S101. The execution-flow creating unit 305 notifies the user of this effect, and prompts the user to correct the input.

For example, in the "work A by the user B", email transmission and copying are to be performed. Hence, the work requires a function of reading data from, for example, a document to create image data, a function of transmitting the image data via email, and a function of printing the image data to create a document. However, when the equipment does not have the function of printing the image data to create a document, the combination is non-executable.

Subsequently, the execution-flow creating unit 305 determines an execution sequence of the functions, thereby creating an execution flow (step S105). Specifically, the execution-flow creating unit 305 determines the execution sequence of the functions based on the settings related to the process descriptions and combinations of the input and output media, and creates the execution flow. More specifically, the execution sequence is determined so that sequence related to the input and the output operations are not reversed. Timings at which the input and output operations are performed are also determined when the work involves two or more of input or output operations.

When the execution-flow creating unit 305 fails to create the execution sequence of the functions based on the process descriptions, the process descriptions having been input are determined not to be valid. For example, when data acquisition from a document is not performed in the work A, no data to be transmitted is provided, and transmission of email is not attained. The execution sequence is determined based on settings made by the user. Examples of such settings include a sequence related to an input operation and an output operation, The sequence for the work A that involves two jobs of transmission of email and making copies is determined so that the resources are most effectively utilized while taking consideration of a sequence in each job. When creation of the execution sequence to implement the process descriptions set by the user fails, the descriptions are determined not to be valid.

The execution-flow creating unit 305 determines validity of the settings for the functions (step S106). Specifically, the execution-flow creating unit 305 determines whether a non-executable setting is included in the settings for the functions in the execution flow. Upon determining the execution sequence of the functions, the execution-flow creating unit 305 sends the execution flow to the execution determining unit 307, and requests the execution determining unit 307 to determine the validity of the settings.

The execution determining unit 307 checks whether a non-executable setting is set for the functions in the received execution flow, and reports a result of determination to the execution-flow creating unit 305. When the execution-flow creating unit 305 receives a result of determination that the settings of the functions are executable from the execution determining unit 307 (YES at step S106), the process moves to step S107. When the execution-flow creating unit 305 receives a result of determination that the activities of the functions are non-executable (NO at step S106), the process returns to step S101. The execution-flow creating unit 305 notifies the user to this effect, and prompts to correct the input.

For example, a combination of contradictory functions, e.g., sorting and stacking, is not to be accepted. In addition, a state of process being performed at the time or a condition of equipment can inhibit execution of processes as defined by the process descriptions. Therefore, whether the processes are currently executable is also checked. For example, when a storage device, such as an HDD, in the equipment is broken, such a process that requires storage of data is not to be accepted.

Thereafter, the thus-created macro is registered (step S107). Specifically, when creation of the execution flow is completed, the execution-flow creating unit 305 sends the created execution flow to the execution-flow storage unit 302, and requests the execution-flow storage unit 302 to register the execution flow. The execution-flow storage unit 302 stores the execution flow received from the execution-flow creating unit 305 in the storage device (HDD) .

Meanwhile, when the macro is automatically set, execution date-and-time is also set as the activity description as shown in Fig. 9. With reference to Fig. 9, for example, the execution date-and-time is set as follows: email transmission: at 10:00 a.m., every Friday (if Friday is holiday, on the preceding working day), and making copies: at 10:00 a.m. every Monday (if Monday is holiday, cancelled).

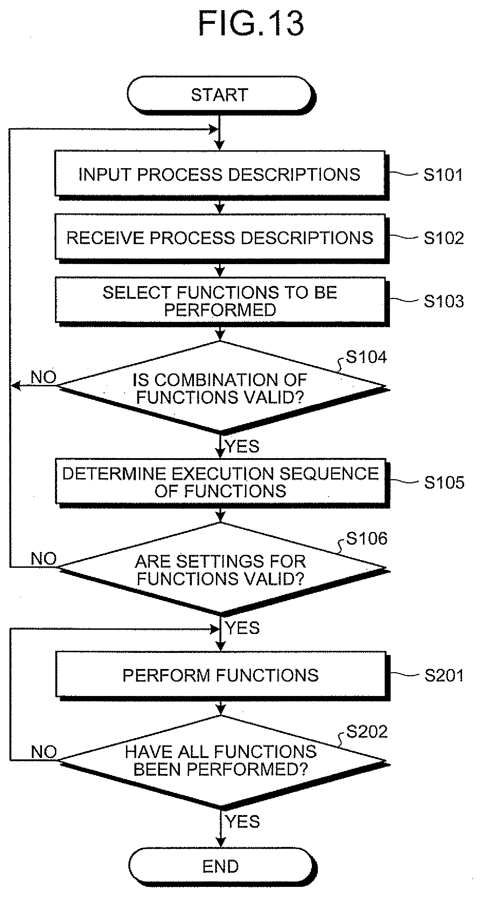

Fig. 13 is a flowchart of a basic process performed by the workflow processing apparatus. Steps in Fig. 13 which is similar to those in Fig. 7 are denoted by identical step numbers, and the same description is not repeated.

With reference to Fig. 13, the process is explained from step S201. When creation of the execution flow is completed, the execution-flow creating unit 305 sends the created execution flow to the flow control unit 303, and requests the flow control unit 303 to execute the process. Upon receipt of the execution request, the flow control unit 303 requests the function control unit 304 to perform the functions on a function-by-function basis according to the sequence and settings indicated by the execution flow. The function control unit 304 receives data on types and descriptions of the functions to be executed from the flow control unit 303, and performs the functions according to the descriptions. The function control unit 304 forms a schedule to perform the functions. When all the functions have been performed (YES at step S202), the process ends.

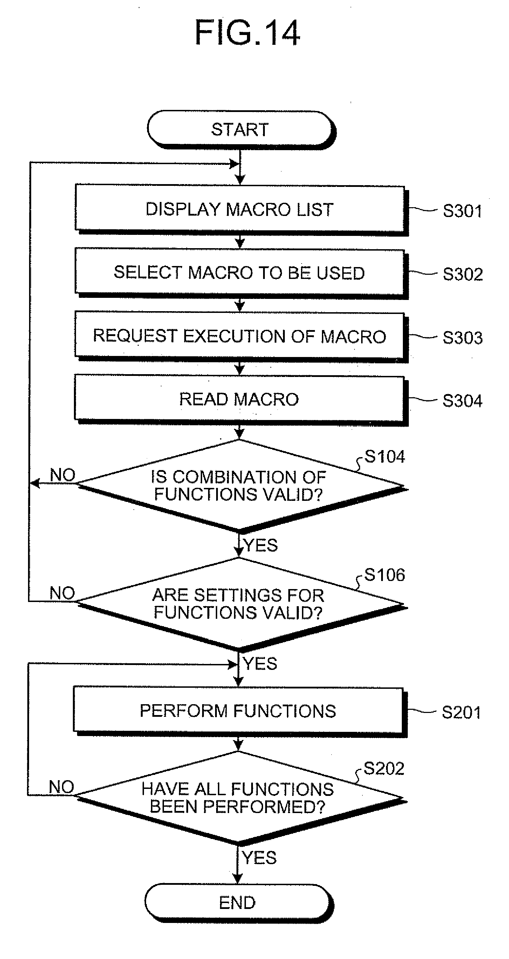

Fig. 14 is a flowchart of a process performed by the workflow processing apparatus utilizing a registered macro to carry out a work. Steps in Fig. 14 which is similar to those in Fig. 10 are denoted by identical step numbers, and the same description is not repeated.

With reference to Fig. 14, the request receiving unit 301 first displays a list of available macros (step S301). Specifically, upon receipt of a request for display of a list from a user, the request receiving unit 301 requests the execution-flow storage unit 302 a list of already-registered macros. The execution-flow storage unit 302 reads the registered execution flows from the storage device (HDD), creates a list of the registered macros, and sends the list to the request receiving unit 301. The request receiving unit 301 receives the list of the macros from the execution-flow storage unit 302, and displays the list on the operating unit as the requested macro list. Displaying all data items in the registered execution flow as the macro list is not necessarily required. Alternatively, only names of the macros can be displayed.

Subsequently, the user selects and designates a macro to be executed from the macro list (step S302). Specifically, the user selects a desired macro from the macro list, and requests the request receiving unit 301 to execute the selected macro.

The request receiving unit 301 issues a request of execution of the macro designated by the user (step S303). Specifically, the request receiving unit 301 requests the execution-flow storage unit 302 to retrieve an execution flow corresponding to the macro designated by the user. The execution-flow storage unit 302 reads the corresponding execution flow from the storage device (HDD), and sends the flow to the request receiving unit 301. As in the process shown in Fig. 13, validity of a combination of functions in the execution flow and that of settings of the functions are determined (steps S104, S106), and thereafter the functions in the execution flow are carried out (steps S201, S202).

In the above, the procedure, in which a registered macro is designated by a user to execute the macro, has been described with reference to Fig. 14. Alternatively, when automatic execution of a macro is set, the flow control unit 303 automatically executes the macro, which is set to automatically run. In the following, an example in which "the work A by the staff B" is set so as to be automatically executed as shown in Fig. 9, which schematically depicts macro settings.

The execution date-and-time is set as follows: email transmission: at 10:00 a.m. every Friday (if Friday is holiday, on the preceding working day), and making copies: at 10:00 a.m. every Monday (if Monday is holiday, cancelled). Hence, the flow control unit 303 checks whether the process of transmitting email is completed. When the process is completed, the process moves to checking whether a printing process has started. When the process of transmitting email is not completed, day-of-week data is retrieved from date-time data provided in the equipment, and whether a current day is Friday, which is the day on which email is to be transmitted, is checked. When the current day is not Friday, checking for the day is not performed until the current date is changed. When the current day is Friday, time data is retrieved from the date-time data provided in the equipment, and whether a current time is later than 10:00 a.m., which is the time at which email is to be transmitted, is checked.

When the current time is earlier than 10:00 a.m., the process waits for a predetermined time period to continue a day-check process. After the predetermined time period, the process is resumed from a time-check process. When the current time has reached 10:00 a.m., the flow control unit 303 requests the function control unit 304 to perform the email transmission process. When the process of email transmission is completed, completion of the process of email transmission is recorded. Checking as to whether the printing process has started is performed basically in the same procedure as that in the email transmission process. When the printing process is performed after the printing process is confirmed to have started, incompletion of the process of email transmission is recorded, and the process ends.

As described above, according to an embodiment of the present invention, a request receiving unit receives an input of descriptions of process pertaining to a work from an operating unit. An execution-flow creating unit creates an execution flow to perform the process. The execution flow indicates a combination of functions, an execution sequence of functions, and detailed settings for executing the functions. The execution-flow creating unit determines whether the execution flow is executable. An execution-flow storage unit stores the execution flow determined to be executable. A flow control unit controls execution of the execution flow, and a function control unit controls resources to control the functions in the execution flow under the control of the flow control unit. Thus, when a routine work is stored in the form of an execution flow in advance, the routine work can be carried out by performing a procedure as defined in the execution flow, which allows the routine work to be performed with a simple operation. Because this allows a user to concentrate on a fundamental job (e.g., creation of a document), it is possible to utilize the time, which is required for the routine work, effectively.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A workflow processing apparatus comprising:
a receiving unit (301) that receives an input related to a work;
a flow creating unit (305) that creates a flow of the work indicating processes of the work, an order in which the processes are performed, functions required for the processes, and settings for the functions;
a determining unit (307) that determines whether the flow is executable;
a storing unit (302) that stores executable flow in a storage device;
a flow control unit (303) that controls execution of the executable flow in the storage device; and
a function control unit (304) that controls resources to perform the functions under control of the flow control unit (303), the resources including an input unit, a processing unit, and an output unit.

2. The workflow processing apparatus according to claim 1, further comprising a table storage unit that stores therein an association table, the association table containing an association between at least a function, an input medium, and an output medium, wherein
the flow creating unit (305) refers to the association table to determine possible combinations of functions to perform the processes, and selects a combination of functions.

3. The workflow processing apparatus according to claim 2, further comprising a function managing unit (306) that determines whether the resources provide the functions selected by the flow creating unit (305), wherein
the determining unit (307) determines whether the flow is executable based on determination by the function managing unit (306).

4. The workflow processing apparatus according to claim 3, wherein the determining unit (307) determines whether the functions are available, and informs the flow creating unit (305) of determination result.

5. The workflow processing apparatus according to claim 4, wherein, when the functions include contradictory functions that are not available together, the determining unit (307) determines that the functions are not available.

6. The workflow processing apparatus according to claim 3, wherein, when the flow creating unit (305) creates the flow, the determining unit (307) determines whether the functions and the settings for the functions are available based on a processing state of the workflow processing apparatus and a condition of each device in the workflow processing apparatus.

7. The workflow processing apparatus according to claim 1, wherein the resources handle image data.

8. A workflow processing method comprising:
receiving an input related to a work;
creating a flow of the work indicating processes of the work, an order in which the processes are performed, functions required for the processes, and settings for the functions;
determining whether the flow is executable;
storing executable flow in a storage device;
controlling execution of the executable flow in the storage device; and
controlling resources to perform the functions, the resources including an input unit, a processing unit, and an output unit.

9. The workflow processing method according to claim 8, further comprising storing an association table, the association table containing an association between at least a function, an input medium, and an output medium, wherein
the creating includes referring to the association table to determine possible combinations of functions to perform the processes, and selecting a combination of functions.

10. The workflow processing method according to claim 9, further comprising checking whether the resources provide selected functions, wherein
the determining includes determining whether the flow is executable based on check result.

11. The workflow processing method according to claim 10, wherein the determining includes determining whether the functions are available, and reporting determination result.

12. The workflow processing method according to claim 11, wherein the determining includes determining that the functions are not available when the functions include contradictory functions that are not available together.

13. The workflow processing method according to claim 10, wherein the determining includes determining, upon creation of the flow, whether the functions and the settings for the functions are available based on a processing state of a workflow processing apparatus and a condition of each device in the workflow processing apparatus.

14. The workflow processing method according to claim 8, wherein the resources handle image data.

15. A computer program product comprising a computer usable medium having computer readable program codes embodied in the medium that, when executed, cause a computer to execute:
receiving an input related to a work;
creating a flow of the work indicating processes of the work, an order in which the processes are performed, functions required for the processes, and settings for the functions;
determining whether the flow is executable;
storing executable flow in a storage device;
controlling execution of the executable flow in the storage device; and
controlling resources to perform the functions, the resources including an input unit, a processing unit, and an output unit.
